# EUROPÄISCHE PATENTSCHRIFT

(11) **EP 0 802 735 B1**
(45) Veröffentlichungstag und Bekanntmachung des Hinweises auf die Patenterteilung: **06.05.1999**
(21) Anmeldenummer: 95943234.5
(22) Anmeldetag: 29.12.1995
(51) Int. Cl.: A22C 13/00

(54) **VERFAHREN UND VORRICHTUNG ZUM HERSTELLEN VON WURSTHÜLLEN SOWIE DAMIT HERGESTELLTE WURSTHÜLLE**
PROCESS AND DEVICE FOR PRODUCING SAUSAGE SKINS AND SAUSAGE SKIN PRODUCED THEREBY
PROCEDE ET DISPOSITIF POUR FABRIQUER DES PEAUX DE SAUCISSE ET PEAU DE SAUCISSE AINSI PRODUITE

(30) Priorität: 10.01.1995 DE 19500470
(43) Veröffentlichungstag der Anmeldung: 29.10.1997
(73) Patentinhaber: Huckfeldt & Thorlichen GmbH & Co., 25436 Tornesch (DE)
(72) Erfinder: LANGE, Johannes, D-25451 Quickborn (DE); PETERS, Joachim, D-25421 Pinneberg (DE)
(74) Vertreter: Glawe, Delfs, Moll & Partner
(86) Internationale Anmeldenummer: EP9505170
(87) Internationale Veröffentlichungsnummer: WO9621359

(56) Entgegenhaltungen:
- DD-A- 140 196
- DE-A- 4 123 745
- DE-C- 970 263
- DATABASE WPI Section Ch, Week 7730 Derwent Publications Ltd., London, GB; Class A97, AN 77-52921 & JP,A,52 070 039 (SUMITOMO BAKELITE K.K.) , 10.Juni 1977 in der Anmeldung erwähnt
- DATABASE WPI Section Ch, Week 9109 Derwent Publications Ltd., London, GB; Class A18, AN 91-061836 & JP,A,03 010 660 (NISSHIN HAM K.K.) , 18.Januar 1991 in der Anmeldung erwähnt
- DATABASE WPI Section Ch, Week 7550 Derwent Publications Ltd., London, GB; Class A92, AN 74-82543V & JP,A,49 075 746 (KUREHA KAGAKU KOGYO KK) , 22.Juli 1974 in der Anmeldung erwähnt

## Beschreibung

Es ist bekannt, Wurst auf der Außenseite mit einer Gewürzschicht zu versehen, beispielsweise Pfeffersalami. Dazu wird die Wurst von der Hülle befreit und nach der Beschichtung mit einer Haftflüssigkeit im Luftstrom mit dem gemahlenen Gewürz bestreut (DE-A 31 35 493). Da dieses Verfahren umständlich ist, wurde auch vorgeschlagen, die Wursthülle innenseitig mit einer eßbaren Schicht zu versehen, die die Gewürze enthält (DE-A 41 23 745, EP-B 408 164, DD-A-140 196, Chemical Abstracts JP 49075746, JP 3010660 Abstract, JP 52070039 Abstract). Dabei wird das Gewürz aber Teil einer vergleichsweise dicken, das Gewürz enthaltenden Bindemittelschicht, die nach dem Abziehen der Hülle auf der Wurst verbleibt. Dadurch wird das Aussehen der Wurst im Vergleich mit herkömmlichen Produkten, beispielsweise Pfeffersalami, beeinträchtigt. Unerwünscht ist es auch, wenn die das Gewürz enthaltende Schicht samt den Gewürzen mit der Wursthülle von der Wurst abgezogen wird. Auch ist die Herstellung der bekannten, gewürzhaltigen Wursthüllen relativ umständlich.

Aus EP-B-408 164 ist bekannt, die Wursthülle innenseitig mit Gewürzpartikeln zu versehen, indem die Innenseite mit einer Klebeschicht versehen wird und die Gewürzpartikeln auf diese haftfähige Schicht aufgestäubt werden. Es wird nur die Behandlung ebenen Hüllenmaterials offenbart, schlauchförmiges Material muß zuvor aufgeschnitten werden.

Nachteilig ist weiterhin, daß das Hüllenmaterial beim Abbinden der Wurstenden mittels Faden oder Drahtclip starker Beanspruchung unterworfen wird, die zum Zerreißen desselben führen kann, wenn sich an der Abbindestelle innenseitig ein scharfes Gewürzfragment befindet.

Der Erfindung liegt die Aufgabe zugrunde, eine Vorrichtung der im Oberbegriff des Anspruchs 1 genannten Art zu schaffen, die es gestattet, schlauchförmige Wursthüllen mit innerer Gewürzbeschichtung herzustellen. Die Erfindung erreicht dies durch die Merkmale des Anspruchs 1 sowie zweckmäßigerweise durch diejenigen der Unteransprüche.

Die erfindungsgemäße Vorrichtung sieht vor, daß die Gewürzpartikeln gegen eine auf der Innenseite der Wursthülle aufgebrachte, klebfähige Beschichtung geschleudert werden. Die Gewürzpartikeln bleiben an bzw. teilweise in der klebfähigen Schicht haften und sind dadurch mit der Wursthülle dauerhaft verbunden, sobald die klebfähige Schicht getrocknet ist. Die so hergestellten Wursthüllen können herkömmlich verarbeitet werden.

Die erfindungsgemäße Vorrichtung hat den Vorteil, daß sie mit geringfügiger Änderung bekannter Wursthüllen-Herstellungsvorrichtungen auskommt. Es sind nämlich Vorrichtungen bekannt, die dazu verwendet werden, endlose Gewebeschläuche innenseitig mit einer Collagenschicht zu versehen, durch die das Gewebe in eine dichte Haut verwandelt wird. Der innenseitige Collagenauftrag kann, solange er noch hinreichend klebfähig ist, zum Binden der Gewürzpartikeln an die Wursthülle verwendet werden. Zu diesem Zweck wird der Beschichtungseinrichtung eine Einrichtung nachgeschaltet, durch welche die Partikeln gegen die Innenseite der geblähten Wursthülle geschleudert werden. Dies geschieht beispielsweise mittels einer Schleuderscheibe oder einer Blasdüse. Das Gewebeschlauchmaterial kann in herkömmlicher Weise über die Beschichtungs- und Schleudereinrichtung geführt werden. Anschließend wird die haftfähige Beschichtung erstarren gelassen. In der Regel bedeutet dies, daß man sie trocknen läßt. Jedoch soll nicht ausgeschlossen sein, daß sie durch andere Vorgänge, beispielsweise chemische Prozesse, erstarrt.

Zweckmäßigerweise wird die Radialgeschwindigkeit für das Aufbringen der Gewürzpartikel auf die Wursthülle den Partikeln durch eine Blasdüse oder Schleuderscheibe erteilt, mit denen sich ein gut kontroliierbarer Auftrag der Gewürzpartikel erreichen läßt.

Erfindungsgemäß kann in den zum Abbinden einzelner Wursthüllen bestimmten Abschnitten der Partikelbelag unterbrochen werden. Damit wird eine zu starke Beanspruchung des Hüllenmaterials verhindert, die zum Zerreißen desselben führen kann, wenn sich an der Abbindestelle innenseitig ein scharfes Gewürzfragment befindet. Bei dem erfindungsgemäßen Verfahren wird in den zum Abbinden einzelner Wursthüllen vorbestimmten Abschnitten die Partikelzufuhr während des Bestreuens der Wursthülleninnenseite abschnittsweise unterbrochen. Alternativ kann vorgesehen sein, daß die in den bezeichneten Abschnitten innenseitig auf die Hülle aufgetragenen Partikeln anschließend wieder entfernt werden, soweit sie eine Größe haben, die die Integrität der Wursthülle an der Abbindestelle gefährden würde, beispielsweise können große Gewürzkörner abgeblasen oder abgebürstet werden. Es kann auch vorgesehen sein, daß abschnittsweise die Partikelzufuhr unterbrochen wird und zusätzlich ein solcher Arbeitsgang erfolgt, der zufälligerweise in diesen Bereichen haften gebliebene Gewürzpartikeln entfernt. Die gewürzfreien Abschnitte können auch dadurch hergestellt werden, daß abschnittsweise der Auftrag des Haftmittels ausgesetzt wird, so daß die Partikeln nicht hängenbleiben können. Auch diese Maßnahme kann kombiniert werden mit der Unterbrechung der Partikelzufuhr und/oder der nachträglichen Entfernung etwa trotzdem haftengebliebener Partikeln.

Das Verfahren wird zweckmäßig in solcher Weise ausgeführt, daß die Partikeln sämtlich oder zu einem wesentlichen Anteil (mehr als 30 Gew.%) nicht gänzlich in die Haftschicht eingebunden sind, sondern jeweils nur zu einem geringen Anteil (weniger als ihr halber Durchmesser) in sie einsinken und gebunden werden, so daß sie beim Abziehen der Hülle von der gereiften Wurst großenteils an oder in der Wurstoberfläche haften bleiben. Dies ist besonders wichtig in denjenigen Fällen, in denen die Haftschicht nicht zu einem verzehrbaren Teil der Wurst werden soll. Jedoch soll dadurch nicht ausgeschlossen werden, daß als Haftschicht Stoffe verwendet werden (insbesondere verzehrbare Eiweißstoffe wie Alginat), die beim Abziehen der Wursthülle ganz oder teilweise an der Wurst verbleiben können.

Es versteht sich, daß für die Bestimmung der Abschnitte, in denen die Partikelbeschichtung unterbrochen wird, die Länge der Wursthüllen zuvor festgelegt sein muß. Mit modernen Steuerungsmitteln ist dies leicht und variabel möglich.

Zweckmäßigerweise wird in dem Bereich, in welchem der Auftrag der Partikeln erfolgt, oder in einem Bereich, durch den sich die mit den Partikeln versehene Wursthülle anschließend bewegt, eine lebhafte Luftbewegung aufrechterhalten, durch die solche Partikeln, die nicht hinreichend haftfest gebunden sind, wieder gelöst werden. Dadurch wird die Gefahr vermindert, daß ungenügend gebundene Partikeln sich später unerwünscht ablösen. In diesem Zusammenhang ist der pneumatische Auftrag der Partikeln besonders zweckmäßig.

Zwar bringt die lebhafte Luftbewegung es mich sich, daß auch in denjenigen Abschnitten, in denen eigentlich keine Partikeln haften bleiben sollen, sich sehr feinkörniges Material ansetzt; dies ist jedoch unschädlich, weil es nicht zu der erwähnten schädlichen Beanspruchung des Hüllenmaterials beim Abbinden führt.

Es ist damit zu rechnen, daß ein Teil der gegen die Hülleninnenseite geschleuderten Partikeln nicht gebunden wird, sondern herabfällt. Damit sie nicht lose in der Wursthülle verbleiben, ist es zweckmäßig, die behandelte Wursthülle nach unten oder oben von der Beschichtungsvorrichtung abzuziehen, wobei eine Einrichtung zum Auffangen von losen Partikeln vorgesehen ist.

Eine nach der Erfindung hergestellte, quasi endlose Wursthülle, die durchgehend, d.h. in der Regel nahtfrei, von Schlauchgewebe gebildet wird, zeichnet sich erfindungsgemäß dadurch aus, daß sie innenseitig eine Schicht von Gewürzpartikeln trägt, die abschnittsweise unterbrochen ist, nämlich in denjenigen Abschnitten, die zum Abbinden einzelner Wursthüllen vorbestimmt sind.

Die Erfindung wird im folgenden näher unter Bezugnahme auf die Zeichnung erläutert, die vorteilhafte Ausführungsbeispiele veranschaulicht. Es zeigen:
Fig.1 einen Längsschnitt durch eine erste und
Fig.2 durch eine zweite Ausführungsform.

Soweit nicht anders angegeben, stellen die dargestellten Teile der Vorrichtung Rotationskörper dar.

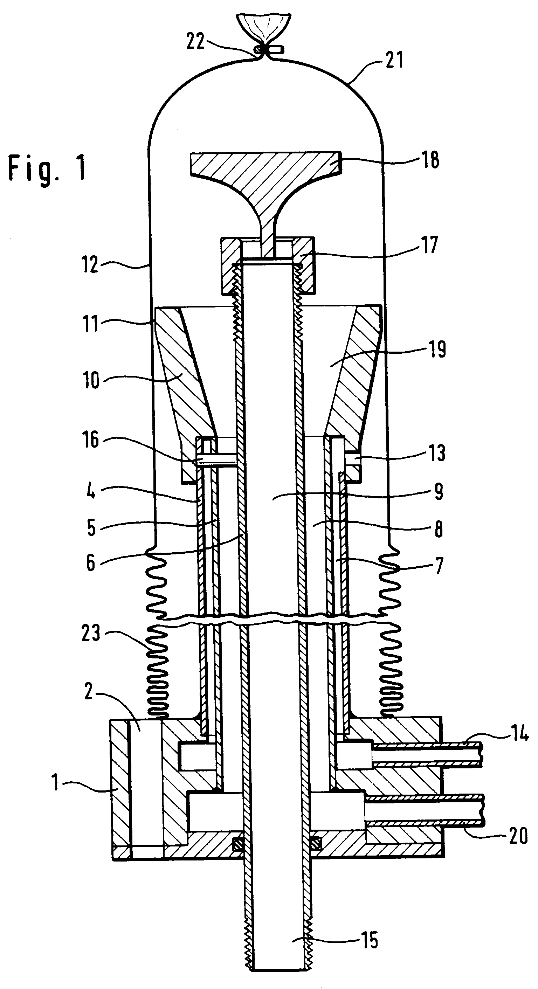

Gemäß Fig.1 ist der Sockel 1 der Vorrichtung mittels nicht dargestellter Bolzen, die durch Schraublöcher 2 geführt sind, an einem nicht dargestellten Halter so befestigt, daß seine Längsachse vertikal steht. An dem Sockel sind drei konzentrisch ineinander angeordnete Rohre 4, 5 und 6 befestigt, deren Zwischen- bzw. Innenräume 7, 8, 9 gegeneinander abgedichtet sind. Die Rohre 4, 5 tragen an ihrem oberen Ende einen Beschichtungsring 10, dessen größerer Außenumfang 11 nicht wesentlich geringer ist als derjenige der zu behandelnden Wursthülle 12 und der ein wenig darunter eine über den Umfang verteilte Mehrzahl von Austrittsöffnungen 13 aufweist, die mit dem Zwischenraum 7 zwischen den Rohren 4 und 5 verbunden sind. Dieser Zwischenraum 7 ist im Sockel mit einem Zuführungsrohr 14 verbunden, das der Zufuhr eines geeigneten Haftmittels dient.

Das innere Rohr 6 ist über seinen unteren, frei liegenden Stutzen 15 an eine pneumatische Förderleitung für Gewürzpulver angeschlossen. Innerhalb des Beschichtungsrings 10 ist es mittels über den Umfang verteilter Stifte 16 zentriert und trägt am Ende eine von den Ringteilen 17, 18 gebildete Umlenkung oder Düse, durch die der die Gewürzpartikeln enthaltende Förderstrom allseits nach außen gelenkt wird. Der unterhalb der Düse 17, 18 befindliche Beschichtungsring 10 bildet innen einen Aufnahmetrichter 19 für herabfallende Partikeln, der in den Zwischenraum 8 zwischen den Rohren 5 und 6 mündet, der unten an eine Absaugöffnung 20 angeschlossen ist. Zentrisch oberhalb dieser mit vertikaler Achse angeordneten Vorrichtung befindet sich eine an sich bekannte Abzugsvorrichtung, durch die eine in Behandlung befindliche Wursthülle 21, die an ihrem oberen Ende 22 dicht verschlossen ist, mit nachgiebiger Kraft nach oben abgezogen wird.

Diese Vorrichtung wird in folgender Weise benutzt. Unterhalb des Beschichtungsrings 10 wird ein Wursthüllen-Vorrat 23 von beispielsweise textilem Wursthüllenmaterial aufgebracht. Dessen oberes Ende wird oberhalb des Beschichtungsrings und der Düse 17, 18 bei 22 geschlossen und an die Abzugseinrichtung angehängt. Durch das Rohr 15 wird Druckluft zugeführt, die den oberhalb des Beschichtungsrings 10 befindlichen Teil der Wursthülle 12 bläht. Durch den Anschlußstutzen 14, den Rohrzwischenraum 7 und die Austrittslöcher 13 wird der Innenseite der Wursthülle das in flüssigem bis teigigem Zustand befindliche Haftmittel zugeführt, das durch den Beschichtungsring 10 auf der Innenfläche der Wursthülle 12 verteilt und in der gewünschten Dicke abgestrichen wird. Fortschreitend mit dem Beschichtungsprozeß wird die Wursthülle mittels der Abzugseinrichtung nach oben abgezogen, wobei sie gebläht bleibt, um schließlich auch im geblähten Zustand getrocknet zu werden. Bis hierhin sind Vorrichtung und Verfahren als bekannt zu betrachten.

Der durch das Rohr 15 zugeführte Luftstrom ist gleichzeitig Fördermedium für das auf die Innenseite der Wursthülle 12 aufzutragende Gewürz, das in fester Form pulvrig oder feinkörnig vorliegt und daher durch den Luftstrom pneumatisch gefördert werden kann. Durch den Umlenkkopf 18 wird es radial nach außen gegen die Innenfläche der Wursthülle geschleudert, wo es größtenteils von der Haftmittelschicht aufgefangen und festgehalten wird. Im anschließenden Trocknungsprozeß wird die Haftung verfestigt. Der Überschuß des Luft- und Teilchenstroms wird vom Trichter 19 aufgenommen und durch den Rohrzwischenraum 8 und den Stutzen 20 abgeführt.

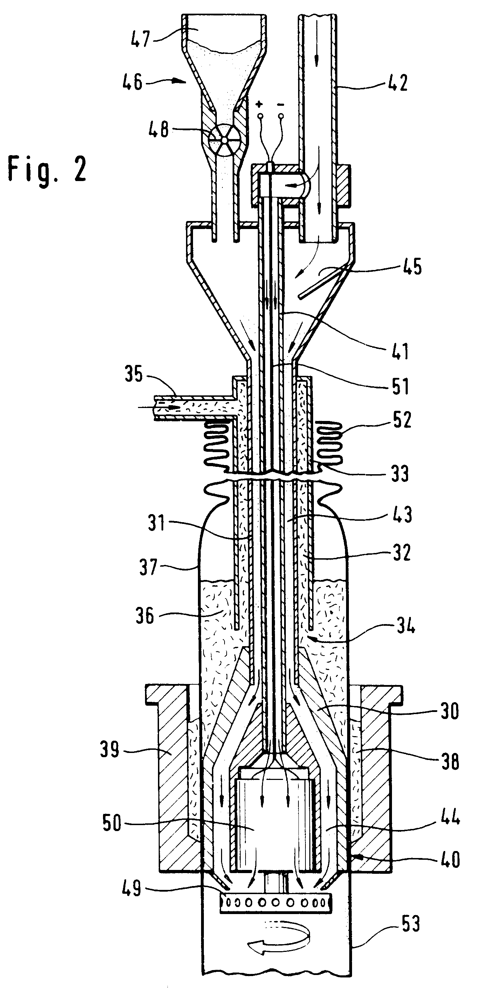

In der Ausführung gemäß Fig.2 ist ein Beschichtungsring 30 hängend an einem Rohr 31 angeordnet, das unter Bildung eines Zwischenraums 32 von einem Rohr 33 umgeben wird. Der oben geschlossene und sich unten zum Beschichtungsring 30 bei 34 öffnende Zwischenraum 32 ist über einen Stutzen 35 an eine Quelle für fließfähiges Beschichtungsmittel angeschlossen. Dies füllt bei 36 den Zwischenraum zwischen der Wursthülle 37 und dem Beschichtungsring 30 bzw. den Rohren 31, 33. Es dringt auch teilweise durch das zu beschichtende Wursthüllenmaterial 37 hindurch und füllt bei 38 den Zwischenraum zwischen dem Wurstfüllmaterial 37 und der Innenfläche eines äußeren Beschichtungsrings 39. Der innere Beschichtungsring 30 und der äußere Beschichtungsring 39 stehen einander bei 40 mit ihrem größten bzw. geringsten Durchmesser gegenüber, um jeweils von der Innen- bzw. Außenseite des Wurstfüllmaterials 37 das Beschichtungsmaterial in der vorbestimmten Schichtdicke abzustreifen. Konzentrisch innerhalb des Rohrs 31 ist ein Rohr 41 angeordnet, das am oberen Ende an ein Rohr 42 angeschlossen ist, das mit einer Druckluftquelle in Verbindung steht. Das Rohr 41 öffnet sich innerhalb oder unterhalb des inneren Beschichtungsrings 30 und teilt dadurch den Luftüberdruck dem Innenraum der beschichteten Wursthülle mit. Die Vorrichtung ist mit vertikaler Achse angeordnet, und die beschichtete Wursthülle wird von ihr während des Betriebs kontinuierlich nach unten abgezogen. Zu diesem Zweck ist eine nicht dargestellte Abzugseinrichtung vorgesehen, die an dem geschlossenen unteren Ende der Wursthülle 53 angreift, entsprechend der unter Bezugnahme auf Fig.1 erläuterten Abzugseinrichtung. Da die beschichtete Wursthülle 53 am unteren Ende geschlossen ist, wird sie unterhalb der Beschichtungseinrichtung durch den aus dem Rohr 41 austretenden Luftstrom gebläht und kann in diesem Zustand getrocknet werden.

Zwischen den Rohren 31 und 41 befindet sich ein Zwischenraum 43, der im Bereich des inneren Beschichtungsrings 30 von einem nach unten offenen Ringraum 44 fortgesetzt wird. Der Zwischenraum 43 ist oben an die breits erwähnte Druckluftleitung 42 angeschlossen. Außerdem geht sie vom unteren Ende eines Trichters 45 aus, dem von einer Gewürzzuführungseinrichtung 46, die einen Dosierzuteiler 48 und einen Vorratsbehälter 47 umfassen kann, das pulvrige oder feinkörnige Gewürz zugeführt wird.

Dieses gelangt mit dem vom Druckluftrohr 42 stammenden Luftstrom in den Rohrzwischenraum 43 und tritt unten aus dem Ringraum 44 aus. Dort trifft es auf eine Schleuderscheibe 49 mit einer Vielzahl radialer Austrittsbohrungen. Sie wird durch einen Motor 50 angetrieben, der umgeben von dem Ringraum 44 an dem Rohr 41 hängt und über Leitungen 51 gespeist wird. Es handelt sich zweckmäßigerweise um einen drehzahlregelbaren Gleichstrommotor. Er wird durch den aus dem Rohr 41 austretenden Luftstrom gekühlt. Die Schleuderscheibe hat zweckmäßigerweise einen Durchmesser von 1/2 bis 3/4 des Durchmessers der Wursthülle, insb. 3-6cm, und wird mit einer Geschwindigkeit von 6.000 bis 20.000 U/min, insb. 12.000 bis 16.000 U/min, angetrieben.

Die Beschichtungseinrichtung kann mit nicht gezeigten Mitteln versehen sein, die den Fluß des Beschichtungsmittels, das Gleiten der Wursthülle und/oder die Benetzung der Wursthülle durch das Beschichtungsmittel erleichtern, beispielsweise mit einer Heizung, die die Temperatur und Fließfähigkeit des Beschichtungsmittels verbessert, oder einer Vibrationseinrichtung.

Die Vorrichtung wird in folgender Weise benutzt. Das Wursthüllmaterial 37 wird aus einem Vorrat 52 bei gleichzeitiger Zufuhr von Beschichtungsmasse kontinuierlich nach unten abgezogen und beschichtet. Gleichzeitig wird das Gewürz durch die Schleuderscheibe 49 auf die Innenfläche der beschichteten Wursthülle 53 geschleudert und bleibt dort großenteils hängen. Loses Überschußgewürz kann aus dem unteren Ende der beschichteten Wursthülle abgezogen werden.

Bei beiden Ausführungsbeispielen kann die Gewürzzufuhr und/oder Haftmittelzufuhr leicht abschnittsweise unterbrochen werden, um diejenigen Wursthüllenabschnitte zu bilden, die von Gewürz frei bleiben sollen.

### Beispiel:

Eine schlauchförmige Wursthülle aus Baumwollgewebe in Leinenbindung mit einem Gewicht von 129 g/m² wurde, wie oben beschrieben, mittels der Vorrichtung gemäß Fig. 1 beschichtet mit einem Bindemittel, das sich aus 3,5 % Alginat, 4 % Glycerin und Rest Wasser zusammensetzte. Das Trockengewicht dieser Beschichtung betrug 80 g/m². Die frische, nasse Beschichtung betrug etwa 1600 g/m² und wurde mit 380 g/m² Gewürz bestreut, nämlich mit grobgebrochenem Pfeffer. Das Trockengewicht des Erzeugnisses betrug in den mit Gewürz beschichteten Bereichen 589 g/m².

Je nach Art, Würzkraft und Mahlfeinheit des Gewürzes kann seine Auftragsmenge zwischen wenigen g/m² und etwa 1000 g/m² liegen. Die optimale Beschichtungsmenge kann - ausgehend von dem genannten Beispiel - leicht für andere Gewürzmengen oder Bindemittelzusammensetzungen durch Versuch ermittelt werden.

## Patentansprüche

1. Vorrichtung zum Herstellen von Wursthüllen, die innenseitig eine Schicht von Gewürzpartikeln tragen, dadurch gekennzeichnet, daß einer Einrichtung (10,30) zum innenseitigen Beschichten der geblähten Wursthülle (12,53) mit einem aus dem flüssigen Zustand erstarrenden Haftmittel eine Einrichtung (18,49) zum Schleudern von Partikeln gegen die Innenseite der Wursthülle (12,53) nachgeschaltet ist.

2. Vorrichtung nach Anspruch 1, dadurch gekennzeichnet, daß die Einrichtung zum Schleudern der Partikeln eine Schleuderscheibe (49) umfaßt.

3. Vorrichtung nach Anspruch 1, dadurch gekennzeichnet, daß die Einrichtung zum Schleudern der Partikeln eine Blasdüse (17,18) umfaßt.

4. Vorrichtung nach Anspruch 2 oder 3, dadurch gekennzeichnet, daß die Partikelzufuhr zur Schleuderscheibe (49) bzw. Blasdüse (17,18) periodisch abschaltbar ist.

5. Verfahren zum Herstellen von Wursthüllen, die innenseitig eine Schicht von Gewürzpartikeln tragen, wobei die Innenseite mit einer aus dem flüssigen Zustand erstarrenden Haftschicht versehen ist, auf die die Gewürzpartikeln aufgebracht werden, dadurch gekennzeichnet, daß in den zum Abbinden einzelner Wursthüllen vorbestimmten Abschnitten die Partikelzufuhr oder die Haftbeschichtung unterbrochen wird.

6. Verfahren nach Anspruch 5, dadurch gekennzeichnet, daß ein wesentlicher Anteil der Partikeln mit dem geringeren Teil von deren Dicke in der Haftschicht eingebunden wird.

7. Verfahren nach Anspruch 5 oder 6, dadurch gekennzeichnet, daß ein wesentlicher Anteil der Partikeln mit einem so geringen Teil in die Haftschicht eingebunden wird, daß sie beim Abziehen der Hülle von der gereiften Wurst an oder in der Wurstoberfläche haften bleiben.

8. Verfahren nach einem der Ansprüche 5 bis 7, dadurch gekennzeichnet, daß die Haftschicht von einem an der Bildung der Wursthülle beteiligten Stoff, insbesondere Collagen, gebildet wird.

9. Quasi endlose Wursthülle, die innenseitig eine Schicht von Gewürzpartikeln trägt, dadurch gekennzeichnet, daß die Partikelschicht abschnittsweise unterbrochen ist, nämlich in den zum Abbinden einzelner Wursthüllen vorbestimmten Abschnitten.

## Claims

1. Device for producing sausage casings which bear a coating of spice particles on the inside, characterized in that an apparatus (18, 49) for projecting particles against the inside of the sausage casing (12, 53) is provided downstream of an apparatus (10, 30) for internally coating the inflated sausage casing (12, 53) with an adhesive which hardens from the liquid state.

2. Device according to Claim 1, characterized in that the apparatus for projecting the particles comprises a thrower disc (49).

3. Device according to Claim 1, characterized in that the apparatus for projecting the particles comprises a blast nozzle (17, 18).

4. Device according to Claim 2 or 3, characterized in that the particle feed to the thrower disc (49) or blast nozzle (17, 18) can be shut off periodically.

5. Process for producing sausage casings which bear a coating of spice particles on the inside, the inside being provided with an adhesive coating which hardens from the liquid state and onto which the spice particles are applied, characterized in that the particle feed or the adhesive coating operation is interrupted in the sections predetermined for tying off individual casings.

6. Process according to Claim 5, characterized in that a substantial proportion of the particles are incorporated into the adhesive coating by the lesser part of their thickness.

7. Process according to Claim 5 or 6, characterized in that a substantial proportion of the particles are incorporated into the adhesive coating by parts of their thickness so low that they remain adhering on or in the sausage surface when the casing is removed from the ripened sausage.

8. Process according to one of Claims 5 to 7, characterized in that the adhesive coating is formed from a substance participating in the formation of the sausage casing, in particular collagen.

9. Semi-endless sausage casing which bears a coating of spice particles on the inside, characterized in that the particle coating is interrupted in sections, that is in the sections predetermined for tying off individual sausage casings.

## Revendications

1. Dispositif pour la préparation de boyaux pour saucisses, qui portent sur leur face intérieure une couche de particules d'épices, caractérisé en ce qu'en aval d'un dispositif (10, 30),destiné à recouvrir la face intérieure du boyau de saucisse (12, 53) gonflé d'un agent adhésif durcissant à partir de l'état liquide, est monté un dispositif (18, 49) destiné à projeter des particules contre la face intérieure du boyau de saucisse (12, 53).

2. Dispositif selon la revendication 1, caractérisé en ce que le dispositif de projection de particules comprend un disque centrifugeur (49).

3. Dispositif selon la revendication 1, caractérisé en ce que le dispositif de projection de particules comprend une buse soufflante (17, 18).

4. Dispositif selon la revendication 2 ou 3, caractérisé en ce que l'alimentation en particules du disque centrifugeur (49) ou de la buse soufflante (17, 18) peut être coupée périodiquement.

5. Procédé de préparation de boyaux pour saucisses, qui portent sur leur face intérieure une couche de particules d'épices, la face intérieure étant pourvue d'une couche adhésive durcissant à partir de l'état liquide, sur laquelle sont appliquées les particules d'épices, caractérisé en ce que l'alimentation en particules ou le revêtement adhésif est interrompu dans les parties prédestinées à la ligature du boyau pour séparer les saucisses individuelles,

6. Procédé selon la revendication 5, caractérisé en ce qu'une proportion importante des particules est liée dans la couche adhésive par la partie plus faible de leur épaisseur.

7. Procédé selon la revendication 5 ou 6, caractérisé en ce qu'une proportion importante des particules est liée dans la couche adhésive par une partie si faible que lorsque l'on enlève le boyau de la saucisse finie, les particules continuent d'adhérer à la surface de la saucisse ou à l'intérieur de celle-ci.

8. Procédé selon l'une des revendications 5 à 7, caractérisé en ce que la couche adhésive est constituée par une substance participant à la formation du boyau pour saucisse, en particulier par du collagène.

9. Boyau pour saucisse pratiquement sans fin, qui porte sur sa face intérieure une couche de particules d'épices, caractérisé en ce que la couche de particules est interrompue par endroits, à savoir dans les parties prédestinées à la ligature du boyau pour déparer les saucisses individuelles.
